# EUROPEAN PATENT APPLICATION

(11) **EP 0 608 097 A2**
(43) Date of publication of application: **27.07.1994**
(21) Application number: 94300329.3
(22) Date of filing: 17.01.1994
(51) Int. Cl.: B32B 7/04

(54) **Composite structure**

(30) Priority: 19.01.1993 GB 9300924
(71) Applicant: Bridge, Iain Norman, Codsall, Wolverhampton, West Midlands WV8 1DW (GB); Robinson, Alexander Mark, Dinmore, Hereford HR1 3JP (GB)
(72) Inventor: Bridge, Iain Norman, Codsall, Wolverhampton, West Midlands WV8 1DW (GB); Robinson, Alexander Mark, Dinmore, Hereford HR1 3JP (GB)
(74) Representative: Skinner, Michael Paul

(57) **Abstract**

. A structure 10 is for use in vehicle bodies, for instance, for absorbing impacts. A core 12 is relatively resilient. A relatively hard cover layer 14 envelopes the core. Ties 16 extend from the cover layer 14 through the core 12 to provide a mechanical tie between the cover layer 14 and the core 12.

## Description

The present invention relates to composite structures. Composite structures according to the present invention can be used for many different purposes, including rail and road vehicle bodies, transportation container construction and building construction.

In many of these applications, and in particular in relation to vehicle bodies and transportation containers, it has been conventional to use metal constructions. Metals have relatively good energy absorbing characteristics, for instance allowing vehicle bodies to crumple in the event of an accident, but are heavy, expensive and vulnerable to corrosion. More recently, it has been proposed to replace metals in various applications, by composite materials, usually comprising a resin with fibre reinforcement. Composite materials generally allow the weight and cost of the structure to be reduced significantly, and are corrosion resistant. However, they do not readily absorb the energy and forces of impacts. They do not crumple like metal constructions can and in this sense can be considered "hard". In the example of a vehicle body, little of the impact load will be absorbed by crumpling, so much of it may be passed to the passengers or equipment on board the vehicle. Passengers and equipment are therefore more vulnerable to serious injury or damage. If the impact is sufficiently great, composite materials may shatter.

It is an object of the invention to provide an improved structure for use in various applications, including those described above.

According to the invention there is provided a structure comprising a relatively resilient core, at least one relatively hard cover layer, and tie means extending from the or at least one of the cover layers into or through the core to provide a mechanical tie between the cover layer and the core.

The cover layer may comprise a polymer material. The polymer material may be a thermosetting resin. The cover layer may be a resin composite material. The cover layer may be a fibre-reinforced composite material. The composite material may consist of mixed fibre reinforcement. The cover layer may be so formed as to have intermittent or continuous reinforcement material which is generally parallel to the boundary of the cover layer and the core, over substantially the whole of the said boundary. The core may comprise a thermoplastic polymer material.

The structure may comprise a plurality of tie means. A plurality of tie means may extend into a single body forming the whole or part of the core. The or each tie means may extend from the cover layer through the core to a face of the core remote from the face covered by the cover layer. Preferably the or each tie means is enlarged at the remote face to provide a surface which bears on the remote face to tie the cover layer to the remote face. The enlarged portion of the or each tie means may be integral with that part of the tie means which extends through the core.

The or each tie means may be formed integrally with the cover layer, or may be bonded to the cover layer. Bonding may be effected by localised energy, such as by microwave irradiation. The tie means may incorporate reinforcement material which is generally parallel to the boundary between the tie means and the core. The reinforcement material of the tie means and of the cover layer are preferably arranged to be generally parallel to each other at the boundary of the tie means and the core. The reinforcement material of the tie means and of the cover are preferably fibres which mingle atthe boundary ofthe tie means and the cover layer.

Preferably the said cover layer covers a first face of the core, the core having a second face and there being a second cover layer of relatively hard material covering the second face and tied to the core by tie means as aforesaid. The tie means may tie the two cover layers together, thereby sandwiching the core between the cover layers to tie the cover layers to the core. The tie means preferably comprise tie members which extend through the core and are attached to or integral with both cover layers. The cover layers may form part of a shell which wholly surrounds the core.

The or at least one tie means may comprise a pi I-larof material located in a cavity in the core. The pillar may be circular in section, or may have an elongate cross-section. The pillar size may vary along its length. The pillar may be most narrow substantially half way along its length. The pi liar may taper gradually from each end to the most narrow point.

The or at least one tie means may be formed by a depression or re-entrant portion formed in the cover layer and extending into or through the core. The material of the depression or re-entrant portion may be attached, e.g. by bonding, to the material of a second cover layer covering another surface of the core. The material of the depression or re-entrant portion may be bonded to the material of a depression or re-entrant portion formed in the said second cover layer and extending into the core.

Preferably a plurality of tie means are arranged in a pre-determined pattern across the core. The pattern may be substantially regular. The tie means may be arranged at the lattice points of a geometric lattice. The tie means may sub-divide the core into cells of core material. Each cell may be integral with a neighbouring cell and connected thereto by a neck of core material located between adjacent tie means at the cell boundary. The tie means may be elongate in section parallel to the surface of the core, the elongate axis of each tie means forming a side of a cell of the core; the cells are preferably polygonal, for instance hexagonal.

The invention also provides a structure which comprises two or more structures attached together, and each according to any of the preceding statements.

The invention also provides a method of forming a structure, in which a relatively resilient core is provided with at least one cavity to receive tie means, tie means are provided in the or each cavity, and a relatively hard cover layer is provided, the cover layer being mechanically tied to the core by the tie means.

The cover means may be formed by moulding. The cover means may be moulded around the core. The cover layer may be moulded wholly around the core. The formation of the cover layer may include an injection moulding step.

Resin material may be moulded around the core. Preferably reinforcement material is placed on the surface of the core before the moulding step is performed. The reinforcement may be placed on the surface of the core within the cavities. Reinforcement material may include fibres, which may be mingled at the boundary of the tie means and the cover layer.

Alternatively, tie means may be placed in the or each cavity before the cover means is moulded around the core, and bonded to the cover means. The tie means may be bonded to the cover means by localised heating or irradiation.

The or at least one tie means may be provided by forming a depression or re-entrant portion in the cover layer and extending into or through the core. The material of the depression of re-entrant portion may be bonded to the material of a second cover layer covering another surface of the core. The material of the depression or re-entrant portion may be bonded to the material of a depression or re-entrant portion formed in the said second cover layer and extending into the core.

The structure may have any feature or combination of features from those set out above.

Embodiments of the present invention will now be described in more detail, by way of example only, and with reference to the accompanying drawings in which:
Fig. 1 is a schematic perspective view of a panel structure formed according to the invention;
Fig. 2 is a partial section of the structure of Fig. 1, showing a tie in more detail;
Figs. 3 and 4 are views corresponding to Fig. 2 but showing alternative forms of tie;
Fig. 5 shows a possible layout of ties;
Fig. 6 is a section along the line V-V on Fig. 5;
Figs. 7a, 7b and 7c illustrate the possible effect of impacts on the structure; and
Figs. 8a, 8b and 8c show schematically a method of forming a structure according to the present invention.

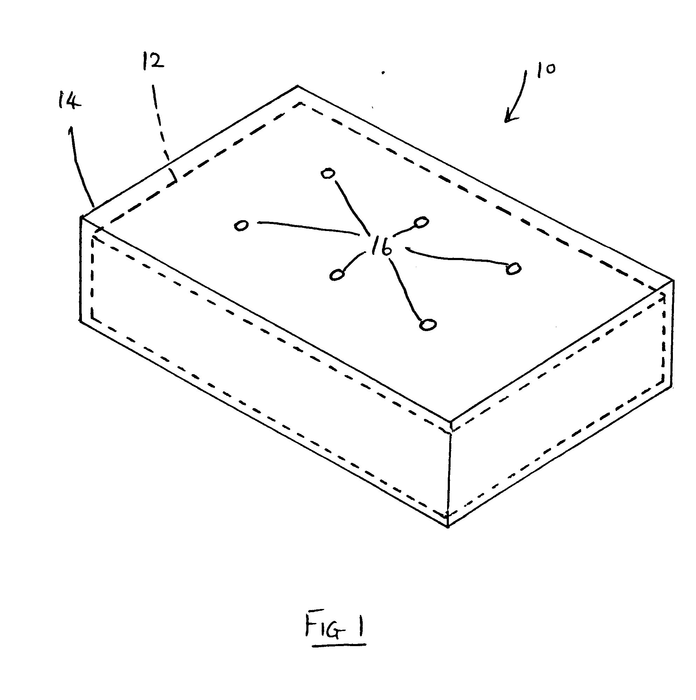

Fig. 1 schematically shows a structure 10 which comprises a core indicated by broken lines at 12. The core is relatively resilient. A cover layer 14 is illustrated as wholly enveloping the core 12, but could alternatively cover only some of the outer surface of the core. The cover layer 14 is relatively hard. Tie means at positions indicated by the numerals 16 extend from the cover layer 14, as will be described, into the core 12, to provide a mechanical tie between the cover layer 14 and the core 12.

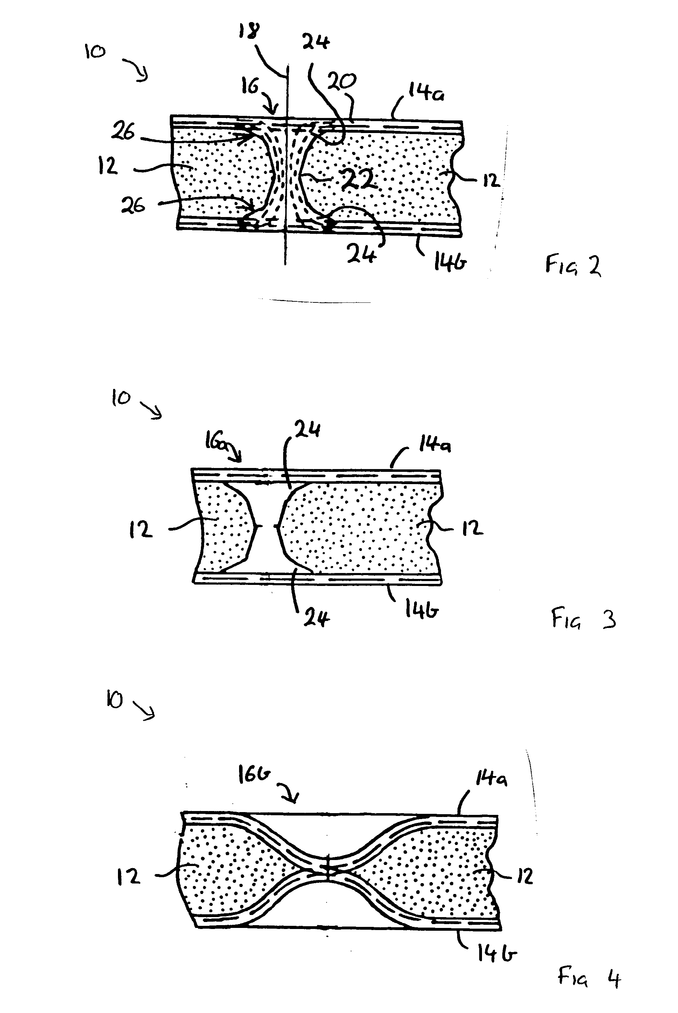

Fig. 2 shows part of the arrangement in more detail. The core 12 has two surfaces covered by cover layers 14. The tie means 16 is in the form of a bar which extends through the core 12. The tie bar 16 shown in Fig. 2 is integral with the two cover layers 14a,14b, thereby forming a mechanical tie between them. The cover layers 14a,14b are in contact with respective surfaces of the core 12. Consequently, the core 12 is sandwiched between the cover layers 14a,14b, and the cover layers 14a,14b are mechanically tied to the core 12.

In this example, the cover layers 14a,14b and the tie bar 16 are formed of resin composite material which incorporates sheets of fibre reinforcement indicated schematically by broken lines 20. It can be seen that the reinforcement 20 extends in the plane of the cover layers 14a,14b and also extends down through the tie bar 16. Thus, the reinforcement is generally parallel to the boundary of the cover layer and the core, and the boundary between the tie bar and the core, over substantially the whole of each boundary.

The tie bar 16 forms a pillar of material through the core 12. The pillar is circular in section (i.e. per- pendicularto its main axis 18). However, the pillardi- ameter varies along its length. The pillar is most narrow at its mid-point 22, for reasons which will become apparent. The pillar tapers gradually from each end (adjacent the cover layers 14a, 14b), to the most narrow point 22. At each end of the pillar 16, the diameter increases significantly to form a flange 24 adjacent the cover layer 14a or 14b. These flanges 24 provide surfaces 26 which bear on the surfaces of the core 12.

It can be seen from Fig. 2 that the cover layers 14a,14b, and the pillar 16, including the flanges 24, are all formed integrally from the composite material which forms the cover layers.

Fig. 1 shows the positions of pillars 16. These are arranged in a pre-determined regular pattern across the core 12. In the example shown in Fig. 1, the pillars are arranged at the lattice points of a generally square or rectangular lattice, but other geometric or non-geometric lattices could be used, including diagonal lattices. The number, spacing and arrangement of the pillar positions can all be varied according to the expected application of a particular structure, the expected impacts to be borne, the manufacturing materials etc.

Each cover layer 14a, 14b can be considered to be associated with a flange 24 formed at the remote end of the pillar 16. This remote flange assists in tying the cover layer 14a to the opposite face of the core 12, in addition to any tying effected by the interconnection of the cover layers 14a, 14b by the pillar 16. Tying is further assisted by the tapering shape of the pillars, which prevents the pillars moving in the core.

Fig. 3 shows an alternative arrangement. In this case, the pillar 16a is formed separately of the cover layers 14a, 14b by any convenient means. For instance, the pillar 16a may be pre-formed and inserted into a corresponding cavity in the core 12, before the cover layers 14a,14b are subsequently formed over the core surface. However, the ends of the pillar 16a (the flanges 24) are bonded to the layers 14a, 14b. After bonding, the construction provides tying between the cover layers and core in the manner described above in relation particularly to Fig. 2.

The pillars shown in Figs. 2 and 3 are both circular in section, but other shapes can be used. In particular, the pillars can be elongate in section and either tapering or non-tapering.

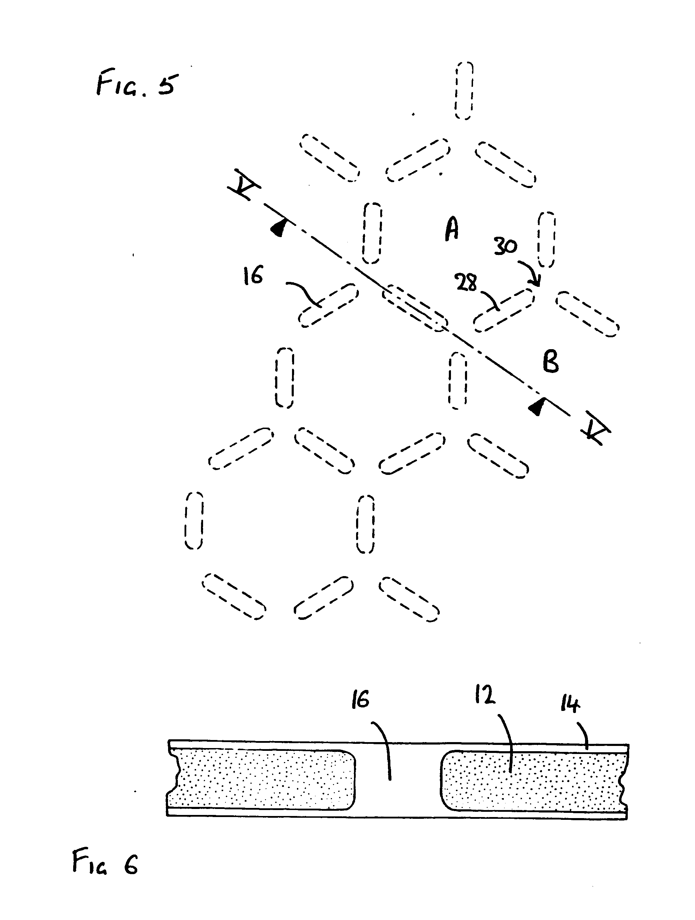

Fig. 4 shows an alternative form of tie means 16b, formed by local depressions or re-entrant portions 16b formed in the material of the cover layers. These dimpled portions 16b extend into the core from both faces, to meet approximately at the mid-point, where they are bonded to complete the tie. Alternatively, a dimpled portion 16b may extend from one cover layer through the core, to be bonded to an undistorted cover layer at the other face of the core. In this arrangement, neighbouring ties are preferably formed by dimpling the cover layers alternately.

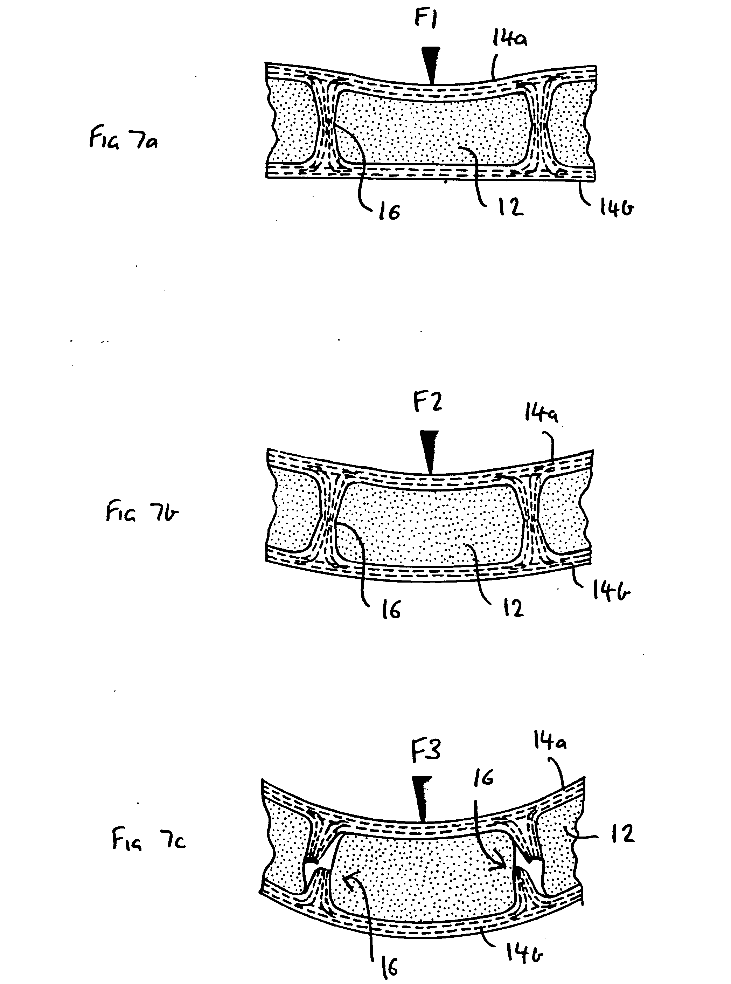

Fig. 5 is a schematic view perpendicular to the surface of the structure 10, showing an alternative layout of pillars 16, and Fig 6 is a sectional view. In this arrangement, each pillar is elongate and round- ended. The pillars are arranged to form a hexagonal lattice, each pillar forming one side of two adjacent hexagons. However, it should be noted that the outline of each hexagon is not fully formed. Adjacent pillars do not meet. There are gaps between them, filled by material of the core 12. Thus, the ties sub-divide the core into cells of core material, each cell consisting of a generally hexagonal block of core material, but each cell being integral with the block of core material in a neighbouring cell. Neighbouring cells are connected to each other by necks of core material at both ends of the pi liar common to both cells. Thus, in Fig. 5, a cell labelled A is adjacent a cell marked B, but only partly shown. A pillar 28 is common to the boundary of both cells A,B. At each end of the pillar 28, a neck 30 of core material extends between the cells A,B, to connect the blocks of core material in those cells. The relative sizes of the necks and the pillars can be varied by varying the length of the pillars to leave larger gaps between them. The necks could be wider than the pillars, if appropriate. Other arrangements and shapes of cells could be used, including arrangements in which some or all of the cells are not connected to all or any of their neighbours. Multiple layer constructions could have different cell and tie arrangements in each layer.

In all of the arrangements described above, a single integral block of core material extends over a large part of or the whole of the structure 10, and is pierced by a plurality of ties. Very large structures may require multiple blocks of core material.

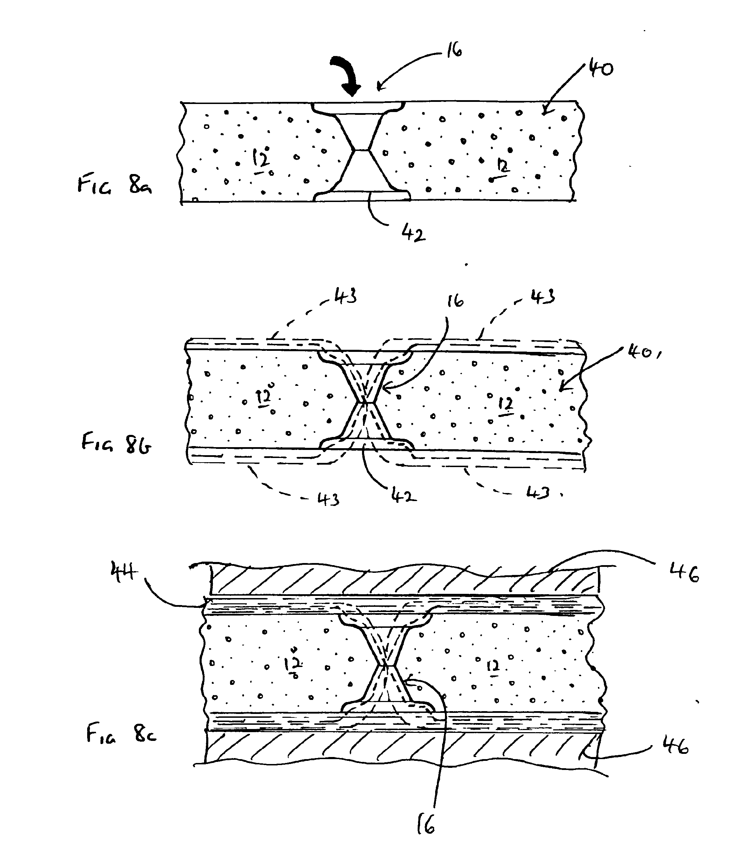

One example of the expected response of the structures described above is illustrated in Figs. 7a, 7b and 7c.

In Fig. 7a, a relatively small impact is indicated by the arrow F1. This impact causes some deflection of the cover layer 14a. This deflection is resisted by the hardness of the cover material, but the impact is passed to the core, thus causing some compression of the resilient core material in addition to deflection of the cover layer. This compression allows the energy of the impact to be dissipated and/or absorbed, principally by the core material, and without significant distortion of the structure, except locally. Moreover, the use of a single block of core material extending through a large region of the structure, as described above, allows the compression of the core 12 to be absorbed throughout a large volume of core material. This allows a relatively large amount of energy to be dissipated into or absorbed over a relatively large volume. This is expected to reduce or eliminate the tendency of composite materials, when used alone, to "bounce" under impact. Simple sheets of composite material tend to bounce away from the body against which they have impacted, or bounce the impacting body away from them. In either case, the result can be dangerous. For instance, in the case of a road vehicle in impact with a fixed structure, the vehicle may be bounded back into the path of other vehicles, resulting in further accidents. The structure of the present invention is expected to greatly reduce or eliminate this bouncing effect.

Fig. 7b shows an impact F2 which is larger than the impact F1. The impact is sufficiently great to cause general distortion by bending of the structure. This wi cause distortion and compression of the core 12, resulting in the dissipation and/or absorption of energy as described above. In addition, there will be distortion of the cover layers 14a,14b and of the tie pillars 16. Again, the core is able to absorb a significant part of the energy involved in the impact so that again, any tendency for bounce when the structure relaxes to its original condition is reduced or eliminated. Thus, the impact has been absorbed by resilient distortion in the structure.

In the case of a critically high impact indicated in Fig. 7c by the impact F3, the structure will deflect sufficiently to cause one or more tie pillar 16 to break, in addition to substantial distortion of the cover layers 14a,14b and compression of core material 12. The breaking of pillars 16 will absorb substantial amounts of energy but it is envisaged that by appropriate design, the pillars can provide the weakest points of the structure, so that they will tend to break and absorb energy before the cover layers 14 tend to shatter. (This may be achievable by providing tie means which are narrow at one point along their length, to provide a weak point). Again therefore, in comparison with a single sheet of composite material, the structure shown in Fig. 7c will have absorbed a considerable amount of energy from the impact F3 before ultimately failing. Thus, if the structure forms part of a vehicle, the damage and injury to the contents and passengers of the vehicle as a result of the i mpact F3 are expected to be significantly less severe than would be the case if a single layer body of composite material had been used.

It will be understood from the above description that when designing a structure for a particular application, the performance for the structure can be modified to suit that application by variation of many factors, including the shape, size, spacing, layout and material of pillars, and the thickness and material of the cover layers and core. For some purposes, it may be sufficient to cover only one surface of the core. For other purposes, several structures of the type described could be used together to form a thicker structure.

Figures 8a,8b and 8c indicate schematically how a structure of the type described above, in particular in relation to Fig. 2, can be constructed. A block 40 of core material is first taken and pierced at each location 42 at which a pillarwill be required (Fig. 8a). Each perforation in the block 40 is complementary to the shape of the pillar to be formed at that location. The outer dimensions of the block 40 are slightly smaller than the outer dimensions of the structure ultimately required, to allow for the presence of cover layers.

In the second step indicated in Fig. 8b, strands or matting 43 of reinforcement fibres are laid over the block 40, including that part of the surface within the perforations 42.

In the third stage of the process, the block 40 is placed in the cavity 44 (Fig. 8c) of a mould tool 46, whose cavity 44 is complementary to the outer surface required on the finished structure. Thus, when the block 40 is placed in the cavity 44, there is clearance between the block 40 and the tool 46.

The fourth step of the process is to inject the void in the cavity 44 with resin. The resin will form a composite layer with the reinforcement 43, thereby forming integrally the cover layers on each surface of the block 40, and the pillars through the perforations 42. The structure may then be disturbed with, for example, vibrations, to cause localised agitation of the reinforcement fibres. This ensures that the fibres passing through the ties are intertwined or mingled with the fibres within the cover layers so that efficient tying occurs. This results in fibre reinforcement extending through the cover and into the ties without discontinuities, which could cause weakness. The pillars tie the cover layers together and to the core, as has been described. The completed structure can then be removed from the tool 46.

In the alternative in which pre-formed pillars are used (as shown in Fig. 3), they will be introduced into the perforated core before the core is placed in the mould tool cavity and bonded to the cover layer, for instance by microwave irradiation.

In the alternative shown in Fig. 4, the perforations may be formed in the core by compressing it between a shaped tool, which may be heated. This may be done after reinforcement has been laid on the core surface. The tool may then retract slightly, to leave a void in which cover layer material may be injected to complete the structure.

It is envisaged that additional formations, such as mounting points for vehicle suspensions, may be formed locally by over-injecting additional material of an appropriate type. The additional material should preferably attach securely to the remainder of the structure.

It is envisaged that the cover layers may be formed of a thermosetting polymer, such as polyester or epoxy or phenolic resin. A blend of two resins could be used, or the cover layer could be homogeneous. The core may be formed of a thermoplastic polymer material, such as solution nitrogenised polyethylene. These core and cover materials are generally considered incompatible, giving rise to a tendency for the cover layer to come away from the core under stress or impact or both, even when chemical bonding or adhesives are used, but this tendency is overcome or mitigated by the mechanical tie provided in the structure according to the invention, but without chemical bonding or adhesives being required.

It will be apparent from the above description that, as has been described, many variations and modifications can be made from the structures described in relation to the accompanying drawings, without departing from the scope of the present invention. Several structures could be used together, for instance stacked one on another, in which case the adjacent cover layers could be integrally formed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A structure (10) characterised by comprising a relatively resilient core (12), at least one relatively hard cover layer (14), and tie means (16) extending from the or at least one of the cover layers into or through the core to provide a mechanical tie between the cover layer and the core.

2. A structure according to claim 1, characterised in that the cover layer (14) comprises a polymer material.

3. A structure according to claim 2, characterised in that the polymer material is a thermosetting resin.

4. A structure according to claim 2 or 3, characterised in that the cover layer (14) is a resin composite material.

5. A structure according to any of claims 2, 3 or 4, characterised in that the cover layer (14) is a fibre-reinforced composite material.

6. A structure according to claim 4 or 5, characterised in that the composite material consists of mixed fibre reinforcement.

7. A structure according to any of claims 1 to 6, characterised in that the cover layer (14) is so formed as to have intermittent or continuous reinforcement material (20) which is generally parallel to the boundary of the cover layer and the core (12), over substantially the whole of the said boundary.

8. A structure according to any preceding claim, characterised in that the core (12) comprises a thermoplastic polymer material.

9. A structure according to any preceding claim, characterised by a plurality of tie means (16).

10. A structure according to any preceding claim, characterised in that a plurality of tie means (16) extend into a single body (12) forming the whole or part of the core.

11. A structure according to any preceding claim, characterised in that the or each tie means (16) extends from the cover layer (14) through the core (12) to a face of the core remote from the face covered by the cover layer.

12. A structure according to claim 11, characterised in that the or each tie means (16) is enlarged at the remote face to provide a surface (26) which bears on the remote face to tie the cover layer (14) to the remote face.

13. A structure according to claim 12, characterised in that the enlarged portion (24) of the or each tie means (16) is integral with that part of the tie means which extends through the core (12).

14. A structure according to any preceding claim, characterised in that the or each tie means (16) is formed integrally with the cover layer (14), or is bonded to the cover layer.

15. A structure according to claim 14, characterised in that bonding is effected by localised energy, such as by microwave irradiation.

16. A structure according to any preceding claim, characterised in that the tie means (16) incorporates reinforcement material (20) which is generally parallel to the boundary between the tie means and the core (12).

17. A structure according to claim 16, characterised in that the reinforcement material (20) of the tie means (16) and the cover layer (14) are arranged to be generally parallel to each other at the boundary of the tie means and the core (12).

18. A structure according to claims 16 and 17, characterised in that the reinforcement material (20) of the tie means (16) and the cover (14) are fibres which mingle.

19. A structure according to any preceding claim, characterised in that the said cover layer (14a) covers a first face of the core (12), the core having a second face and there being a second cover layer (14b) of relatively hard material covering the second face and tied to the core by tie means (16) as aforesaid.

20. A structure according to claim 19, characterised in that the tie means (16) ties the two cover layers (14a,14b) together, thereby sandwiching the core (12) between the cover layers to tie the cover layers to the core.

21. A structure according to claim 19 or 20, characterised in that the tie means (16) comprise tie members which extend through the core (12) and are attached to or integral with both cover layers (14).

22. A structure according to any of claim 19 to 21, characterised in that the cover layers (14) form part of a shell which wholly surrounds the core (12).

23. A structure according to any preceding claim, characterised in that the or at least one of the tie means (16) comprises a pillar (16a) of material located in a cavity in the core.

24. A structure according to claim 23, characterised in that the pillar (16a) is circular or elongate in cross-section.

25. A structure according to claim 23 or 24, characterised in that the pillar size varies along its length.

26. A structure according to claim 24, characterised in that the pillar(16a) is most narrow substantially half way along its length.

27. A structure according to claim 25 or 26, characterised in that the pillar (16a) tapers gradually from each end to the most narrow point (22).

28. A structure according to any preceding claim, characterised in that the or at least one of the tie means (16b) is formed by a depression or re-entrant portion formed in the cover layer (14) and extending into or through the core (12).

29. A structure according to claim 28, characterised in that the material of the depression or re-entrant portion (16b) is attached to the material of a second cover layer (14b) covering another surface of the core (12).

30. A structure according to claim 28 or 29, characterised in that the material of the depression or re-entrant portion (16b) is bonded to the material of a depression or re-entrant portion formed in the said second cover layer (14b) and extending into the core (12).

31. A structure according to any preceding claim, characterised in that a plurality of tie means (16) are arranged in a predetermined pattern across the core (12).

32. A structure according to claim 31, characterised in that the pattern is substantially regular.

33. A structure according to claim 31 or 32, characterised in that the tie means (16,28) are arranged at the lattice points of a geometric lattice.

34. A structure according to any of claims 31 to 33, characterised in that the tie means (16,28) may subdivide the core into cells (A,B) of core material (12).

35. A structure according to claim 34, characterised in that each cell (A,B) is integral with a neighbouring cell and connected thereto by a neck (30) of core material located between adjacent tie means (28) at the cell boundary.

36. A structure according to claim 34 or 35, characterised in that the tie means (28) are elongate in section parallel to the surface of the core (12), the elongate axis of each tie means forming a side of a cell (A,B) of the core (12).

37. A structure according to claim 34, 35 or 36, characterised in that the cells (A,B) are polygonal.

38. A structure characterised by comprising two or more structures attached together, and each according to any of the preceding claims.

39. A method of forming a structure (10), characterised in that a relatively resilient core (40) is provided with at least one cavity (42) to receive tie means (16), tie means are provided in the or each cavity, and a relatively hard cover layer (14) is provided, the cover layer being mechanically tied to the core by the tie means.

40. A method according to claim 39, characterised in that the cover means (14) are formed by moulding or pressing.

41. A method according to claim 40, characterised in that the cover means (14) are moulded around the core (40).

42. A method according to claim 40 or 41, characterised in that the cover layer (14) is moulded wholly around the core (40).

43. A method according to any of claims 40 to 42, characterised in that the formation of the cover layer (14) includes an injection moulding step.

44. A method according to any of claims 40 to 43, in which resin material is moulded around the core (40).

45. A method according to any of claims 40 to 44, in which reinforcement material (43) is placed on the surface of the core (40) before the moulding or press step is performed.

46. A method according to claim 45, characterised in that the reinforcement (43) is placed on the surface of the core (40) within the cavities (42).

47. A method according to any of claims 39 to 46, characterised in that the reinforcement material (43) comprises fibres which are mingled at the boundary of the tie means (16) and the cover layer (14).

48. A method according to any of claims 39 to 45, characterised in that tie means (16) are placed in the or each cavity (42) before the cover means (14) is moulded around the core (40), and bonded to the cover means.

49. A method according to claim 48, characterised in that the tie means (16) are bonded to the cover means (14) by localised heating or irradiation.

50. A method according to any of claims 39 to 49, characterised in that the or at least one tie means (16) is provided by forming a depression or re-entrant portion (16b) in the cover layer and extending into or through the core (12).

51. A method according to claim 50, characterised in that the material of the depression or re-entrant portion (16b) is bonded to the material of a second cover layer (14b) covering another surface of the core (12).

52. A method according to claim 51, characterised in that the said material (16b) is bonded to the material of a depression or re-entrant portion formed in the said second layer (14b) and extending into the core (12).

53. A method according to any of claims 39 to 52, for forming a structure (10) according to any of claims 1 to 38.
